Europäisches Patentamt

European Patent Office

Office européen des brevets

(11) Publication number: **0 248 495 B1**

## EUROPEAN PATENT SPECIFICATION

(45) Date of publication of patent specification: **02.12.92** (51) Int. Cl.⁵: **C09K 7/02**

(21) Application number: **87201030.1**

(22) Date of filing: **02.06.87**

The file contains technical information submitted after the application was filed and not included in this specification

(54) **Potassic drilling mud.**

(30) Priority: **05.06.86 IT 2068286**

(43) Date of publication of application:
**09.12.87 Bulletin 87/50**

(45) Publication of the grant of the patent:
**02.12.92 Bulletin 92/49**

(84) Designated Contracting States:
**ES FR GB IT NL**

(56) References cited:
**US-A- 2 425 768**
**US-A- 2 468 792**
**US-A- 2 776 259**

(73) Proprietor: **AGIP S.p.A.**
**Corso Venezia 16**
**I-20121 Milano(IT)**

(72) Inventor: **Radenti, Giuseppe**
**Via Triulziana 36/C**
**I-20097 San Donato Milanese Milan(IT)**
Inventor: **Palumbo, Sergio**
**Via Marco d'Agrate 23**
**I-20139 Milan(IT)**
Inventor: **Zucca, Giovanni**
**Via Bordolano 3/A**
**I-20097 San Donato Milanese Milan(IT)**

(74) Representative: **Roggero, Sergio et al**
**Ing. Barzanò & Zanardo Milano S.p.A. Via**
**Borgonuovo 10**
**I-20121 Milano(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 248 495 B1

**Description**

The present invention relates to a potassic drilling mud.

It is known that, during the drilling operations, the stability of the bore is one of the most important factors which determine the success of the drilling operation. The instability of the bore can in fact involve the erosion and the dispersion of the clays constituting the rock formation, and that can cause the occurrence of cavities, stuck pipes and the abandonment of the bore. Furthermore, the clays dispersed in the mud can decrease the drilling speed.

One of the possible actions for obviating such drawbacks consists in reducing the hydration of the clays, by means of the addition of potassium salts to the drilling mud. In fact, the potassium ions can be exchanged with the sodium ions present in the clays, and, thanks to their particular structure, can reduce the trend of the same clays to get hydrated, thus increasing their stability.

It is known that drilling muds containing potassium can be obtained by adding a potassium salt, generally KCl or $K_2CO_3$ to an aqueous basis containing clay, viscosifiers and filtrate reducers, possible fluidifiers, possible weight-increasing agents, possible plugging agents and possible surfactants.

The most widely used viscosifier and/or filtrate reducer is sodium carboxymethylcellulose and, more generally, the sodium salt of a cellulose carboxymethyl ether having a polymerization degree comprised within the range of from 500 to 1,500 when it is used as a viscosifier, and a polymerization degree comprised within the range of 150 to 500 when it is used as a filtrate reducer.

The use of cellulose carboxymethyl ethers in the drilling mud involves, obviously, a continuous replenishment of the polymer, because of the mechanical, thermal and oxidative degradation thereof, and this causes, as a consequence, when sodium salts are used, a continuous increase in the sodium ion concentration, which can become equal to, or even higher than, the concentration of the potassium ions, with the consequence that the stabilization of the bore is no longer possible, unless also potassium salts are continuously added for the purpose of restoring the optimum concentration thereof.

Approaches directed to solving this problems are disclosed in US-A-2 425 768 and US-A-2 776 259, which contemplate the use of alkali metal carboxyalkylcelluloses and, more particularly, potassium carboxyalkylcelluloses.

The prior art procedures, especially when sodium carboxymethylcelluloses are used, require that both carboxymethylcellulose and potassium salts be continuously replenished.

On the other hand, the use of potassium carboxymethylcelluloses, alone, has proven not to offset the drawbacks of the prior art drilling minds and processes discussed in the foregoing.

With a view to overcoming the drawbacks outlined above, the present invention provides, according to one of its aspects, a clay-hydration-reducing drilling mud facultatively including a potassium salt of carboxymethylcellulose (K-CMC) having a minimum degree of carboxymethyl substitution of 0,8, characterized in that it comprises, in an aqueous medium:

(a) from 0,1% to 5% by weight, relative to the overall weight of the drilling mud, of a potassium salt of a polyanionic cellulose (K-PAC), having a resistance to electrolytes, expressed as the ratio of the apparent viscosity of a 0,6% solution of the pure polyanionic cellulose potassium salt (K-PAC) in a 4,0% aqueous solution of NaCl to the apparent viscosity of said 0,6% solution of the pure polyanionic cellulose potassium salt (K-PAC) in distilled water, greater than nine tenths, and still possessing filtrate reduction power up to 150°C;

(b) from 2% to 8% by weight of clay;

(c) from 0,05% to 2% by weight of a fluidizer selected from tannins, alkali-metal polyphosphonates, treated lignins, and lignosulphonates;

(d) from 5% to 30% by weight of a plugging agent selected from cellophane, mica, vermiculite, limestone, gilsonite, almond shell, asbestos, straw and vegetable fibres; and optionally

(e) weight-increasing materials, lubricants and from 0.5% to 2.0% by weight of a surfactant.

The use of polyanionic cellulose (K-PAC), alone, or, facultatively, concurrently with the potassium carboxymethylcelluloses (K-CMC) has proven to solve the problems at stake quite satisfactorily.

The well known clay-hydration-reducing action of the potassium ions is therefore exalted in comparison with that which can be experienced by the mere addition of KCl or the conventional sodium salt of a carboxymethyl ether, or the conventional potassium carboxymethylcelluloses (K-CMC), the latter being used alone.

The polyanionic celluloses (PAC) belong to the great family of the carboxymethyl celluloses (CMC): the latter exhibit, in aqueous solution, a more favourable rheological behaviour, a higher retentive power, a greater tolerance of electrolytes, and a clay-hydration-reducing action which is higher than that of the usual CMCs.

2

These favourable properties are particularly appreciable whenever the polyanionic cellulose concerned is a potassium polyanionic cellulose (K-PAC).

More particularly, a "potassium salt of a polyanionic cellulose" (K-PAC) is a particular cellulose carboxymethyl ether which is endowed with a resistance to the eletrolytes and a filtrate reducing power up to a temperature of 150°C as defined in the foregoing, whereas a conventional potassium salt of a carboxymethyl cellulose ether (K-CMC) has a carboxymethyl substitution degree of 0,8, a resistance to the electrolytes, as defined in the foregoing, smaller than nine tenths, and its filtrate reducing power lies within the conventional limits.

In the case in which it is desired to use, in addition to the potassium polyanionic cellulose (K-PAC), also a potassium salt of carboxymethylcellulose (K-CMC), the latter is prepared by activating cellulose with potassium hydroxide (the KOH/cellulose weight ratio being from 0,1 to 1,6), optionally using a diluent, whereafter cellulose is etherified with monochloroacetic acid or a salt thereof, the weight ratio of monochloroacetic acid, or salt concerned, being from 0,2 to 1,4.

The diluent, if any, is removed, the product is dried and ground to any desired particle size.

The product so obtained may be impure for KCl and potassium glycolate: they can be removed, if so desired.

The product is chemically assessed as usual by determining the degree of substitution, the titre, the viscosity of an aqueous solution of the product in the presence or the absence of electrolytes.

Performances are assessed under the provisions of the OCMA (Oil Company Material Association) and API (American Petroleum Institute) Standards and the viscosity is measured with a Fann viscometer.

More particularly, the preparation of the potassium carboxymethylcellulose (K-CMC) comprises the steps of grinding the cellulose, slurrying it in an aqueous alcoholic medium, such as water/isopropanol, chemically attacking the cellulose with aqueous KOH for a time of from 0,5 hour to 2 hours, whereafter the KOH activated cellulose is attacked by a solution of monochloroacetic acid, the preferred solvent being the aqueous alcoholic medium referred to above, at a temperature of from 30°C to 70°C, the preferred range being from 40°C to 50°C, and for a time of from 2 to 6 hours.

The expected product is collected on a filter and dried to a temperature up to 120°C.

According to another aspect, the invention provides a process for drilling through clay strata, comprising the step of inhibiting the hydration of the clays which surround a drilling bore by using the afore-mentioned clay-hydration-reducing drilling mud.

As to the components of the drilling mud in question, other than the mentioned K-CMC and K-PAC, clay may be selected from bentonite, attapulgite and sepiolite.

The fluidifiers are selected from tannins, alkali metal polyphosphates, treated lignins, lignosulphonates, in particular iron lignosulphonates and chromium lignosulphonates.

The weight-increasing agents can be selected from baryta, limestone, haematite, magnetite, and siderite.

The lubricants can be selected from mineral and vegetable oils, emulsions and surfactants.

The plugging agents can be either lamellar, such as cellophane, mica and vermicultite, or granular, such as limestones, gilsonite, almond shells, or also fibrous, such as asbestos, straw and vegetable fibres.

In order to illustrate in more detail the practical aspects of the invention, a few examples will be reported hereinafter.

The carboxymethylcelluloses (K-CMC) of Examples 1 and 2 may facultatively be used in combination with the polyanionic celluloses (K-PAC) of this invention:

Example 1

100 g of cellulose of size 5x5 mm and 1 mm thick were charged into a rotary-blade kneader, together with 500 ml of anhydrous methanol.

Once the mass was evenly kneaded, it was placed on a Gooch G3 filter and suction was applied, pressing the cellulose on the filter, so as to drive methanol off as completely as practicable.

The cellulose was removed from the filter and dried in an evacuated oven at 80°C.

The dried cellulose was charged, under a nitrogen stream, to a flask, inside which the dispersant, constituted by a mixture of 819 g of isopropanol and 145 g of water, and then an aqueous solution at 50% by weight of KOH (48.2 g of KOH in 48.2 g of $H_2O$), were added, with continuous stirring. The reaction was made proceed for about 1 hour at room temperature, so to obtain a homogeneous mass.

Then, an alcoholic solution of 38.8 g of monochloroacetic acid in 62.4 g of isopropanol was fed over a 30-minute time. At the end of the addition of monochloroacetic acid, which started at room temperature, the temperature reached the value of 40°C.

3

The reaction was continued for 1 hour at 40°C, and the reaction mass was then heated to 65°C.

This temperature was maintained for 2 hours; it was then decreased to approximately 50°C during a time of about 2 hours.

Stirring was then discontinued and the reaction mixture was left standing overnight.

The day after, the reaction mass was filtered on Gooch, and potassium carboxymethylcellulose was dried in an oven, under vacuum, at 110°C.

The carboxymethylcellulose prepared as disclosed was compared to the sodium carboxymethylcellulose available from the market, and it was found to have, besides the property of supplying K ions with no potassium salt addition, also a higher apparent viscosity, thus evidencing a lower degree of depolymerization of the cellulose used as the starting material.

Example 2

This example discloses further preparations of the potassium salt of a cellulose carboxymethyl ether.

To 10 kg of wood cellulose in subdvided form, charged to a reactor capable of securing a homogeneous dispersion of cellulose in the liquid phase, 50 litres of an azeotropic mixture of isopropyl alcohol and water and 8.6 kg of KOH at 90% are added.

After 1 and a half hour of stiring at 20°C, 7.3 kg of monochloroacetic acid dissolved in 8 l of isopropyl alcohol are added. The addition must be carried out in such a way as not to exceed 45°C. The temperature is then increased to 70°C over a 1-hour time, and is maintained 1 hour at that value, with stirring.

The reaction mixture is cooled and the solid phase is recovered by filtration, and is then dried to yield 20.5 kg of potassium salt of low-molecular weight carboxymethylcellulose (K-CMC/LV).

The analytical characterization of the product is shown hereunder.

The above reported preparation was repeated by starting from cellulose from cotton linters, having a higher molecular weight than of wood cellulose.

The obtained product was given the code K-CMC/HV.

The preparation conditions were the same.

K-CMC/HV was purified as follows: 1 kg of K-CMC/HV is dispersed in 7 litres of an isopropanol-water azeotropic mixture, and the dispersion is stirred for half an hour, for extracting the salts contained in it as reaction byproducts.

The mass is filtered and the damp solid phase undergoes the same operation for an adequate number of times for obtaining, after drying, a product having a titer of 98.0%, relatively to the dry substance.

The product is given the code K-CMC/HV/P.

The analytical characteristics of the so-obtained products are:

|  | K-CMC/LV | K-CMC/HV | K-CMC/HV/P |
|---|---|---|---|
| Carboxymethyl substitution degree | 0.85 | 0.9 | 0.9 |
| Brookfield viscosity, LTV 20°C, 60 rpm, concentration = 2%; cP | 23 | 2500 | |
| concentration = 1%; cP | | | 2000 |
| Titer, % | 61.0 | 60.4 | 98.0 |

Example 3

To 10 kg of cotton linters in subdivided form, charged to a reactor capable of providing a homogeneous dispersion of cellulose in the liquid phase, 60 litres of isopropyl alcohol/water azeotropic mixture, and 11.5 kg of KOH at 90% are added.

After 1 and a half hours of stirring at 20°C, 4.9 kg of monochloroacetic acid dissolved in 5 l of azeotropic isopropyl alcohol is added. The addition must be carried out in such a way as not to exceed 40°C. The temperature is then increased to 50°C, and is maintained 1 hour at that value.

With the reaction mixture being cooled, a further 4.8 kg of monochloroacetic acid dissolved in 5 litres of azeotropic isopropyl alcohol is added, and the temperature is increased to 70-75°C during a 1 h time. The temperature is then maintained at that value for an additional hour, with continuous stirring. The reaction mixture is cooled and the solid phase is recovered by filtration, and is then dried to yield 23 kg of potassium salt of cellulose carboxymethyl ether.

The rheological characterization of the product allows it to be classified as a polyanionic cellulose (K-PAC/1) (See Example 5).

The analytical characterization of the product is reported hereunder.

Another way of operating, for the purpose of obtaining a high-performance cellulose carboxymethyl ether is as follows.

The process is carried out as above, inside a tightly sealed reactor, capable of withstanding 1 MPa (10 abs.atm.), using cotton linters and using, in the second addition, 4.5 kg of monochloroacetic acid. At the end of the reaction with monochloroacetic acid, to the reactor 0.3 kg of ethylene oxide is charged, and the mass is kept stirred until the overpressure disappears. The reaction mass is neutralized with 0.2 kg of acetic acid, and the process is then continued as above, a product being obtained, to which the code K-PAC/2 is given.

The obtained products have the following characteristics:

|  | K-PAC/1 | K-PAC/2 |
|---|---|---|
| Degree of carboxymethyl substitution | 1.1 | 1.05 |
| Molar substitution for ethylene oxide | - | 0.06 |
| Fann apparent viscosity, 1% at 20°C, 600 rpm; cP | 60 | 55 |
| Titer, % | 59.0 | 57.5 |

Example 4
– – – – –

The present example discloses the rheological characteristics of a mud obtained by using K-CMC/LV, as compared to a mud obtained by using the sodium salt of a CMC having an equal titer.

A bentonite suspension is prepared by adding 40 g of bentonite (Magcogel) to 1000 ml of deionized water.

The suspension is left standing overnight.

To 416 g of the base suspension 8 g of KCl is added, with stirring, and, after the complete dissolving of KCl, 0.4 g of KOH is added. To said fluid the necessary amount is then added of cellulose carboxymethyl ether. The rheological characteristics of the filtrate are checked after 16 hours of ageing at room temperature, and 5 minutes of stirring on Hamilton Beach apparatus.

The mud is then collected and directly introduced into the ageing cell, wherein nitrogen is bubbled for 15 minutes; it is then submitted to a further 16 hours of ageing at 121°C inside a rotary oven, with steel cells.

The evaluation was carried out at room temperature according to the customary procedures, by using the FANN mod. 35 SA/SR 12 viscometer.

5

| Results After Ageing For 16 Hours At Room Temperature | | | | | | | | |
|---|---|---|---|---|---|---|---|---|
| Cellulose Ether | Na-CMC | | | | K-CMC/LV | | | |
| Concentration (g/100 ml) | AV | PV | YP | FL | AV | PV | YP | FL |
| - | 26 | 5 | 42 | 59 | 26 | 5 | 42 | 59 |
| 0.2 | 8 | 5 | 6 | 18.2 | 10 | 5 | 10 | 15.5 |
| 0.4 | 6 | 5 | 2 | 11.7 | 9 | 7 | 4 | 10.8 |
| 0.6 | 8 | 8 | 0 | 9.5 | 12 | 10 | 4 | 7.6 |
| 0.8 | 0.10 | 0.09 | 2 | 7.8 | 0.15 | 0.12 | 6 | 6.8 |
| 1.0 | 0.12 | 0.10 | 4 | 6.6 | 0.18 | 0.14 | 8 | 6.1 |
| 1.2 | 0.14 | 0.12 | 4 | 6.5 | 0.22 | 0.16 | 12 | 5.7 |
| Results After Ageing For 16 Hours At 121°C | | | | | | | | |
| Cellulose Ether | Na-CMC | | | | K-CMC/LV | | | |
| Concentration (g/100 ml) | AV | PV | YP | FL | AV | PV | YP | FL |
| 0.6 | 0,13 | 0.08 | 10 | 11.3 | 0.19 | 0.08 | 22 | 10.0 |
| 0.8 | 0.12 | 0.08 | 8 | 12.4 | 0.17 | 0.11 | 12 | 8.1 |
| 1.0 | 0.11 | 0.08 | 6 | 8.8 | - | - | - | - |
| 1.2 | 0.12 | 0.10 | 4 | 7.2 | 0.20 | 0.14 | 12 | 6.0 |

Key to the meanings of the Abbreviations:

- AV Apparent viscosity $Ns/m^2$

- PV Plastic viscosity $Ns/m^2$

- YP Flowability Threshold (pounds/100ft$^2$ 47,07$\cdot$10$^{-6}$ bar)

- FL API Fluid loss (ml)

## Example 5

A bentonite suspension is prepared by adding 40 g of Cinicola bentonite to 1000 ml of deionized water. The suspension is left standing overnight.

To 416 g of the base suspension, 16 g of KCl is added, with stirring, and, after the complete KCl dissolving, 0.6 g of KOH is added. To the said suspension 2.8 g (0.7%) of K-CMC/LV plus variable amounts of K-PAC/1 are added. The suspension is stirred 20 minutes on the Hamilton Beach apparatus, and the rheological and control characteristics of the filtrate are measured. A parallel test is carried out by using, together with 2.8 g of K-CMC/LV, variable amounts of K-CMC/HV.

The results show the better rheological behaviour of K-PAC relatively to high-viscosity K-CMC:

| Concentration | K-PAC/1 | | | | K-CMC/HV | | | |
|---|---|---|---|---|---|---|---|---|
| (g/100 ml) | AV | PV | YP | FL | AV | PV | YP | FL |
| 0.3 | 0.20 | 0.13 | 14 | 7.1 | - | - | - | - |
| 0.5 | 0.29 | 0.19 | 20 | 5.8 | 0.26 | 0.18 | 16 | 6.4 |
| 0.7 | 0.42 | 0.27 | 30 | 5.0 | 0.37 | 0.27 | 21 | 6.1 |
| 0.9 | - | - | - | - | 0.49 | 0.33 | 32 | 6.5 |
| As relates to the meanings of AV, PV, YP and FL codes, see preceding Example 4. | | | | | | | | |

## Example 6 (COMPARATIVE)

The process is carried out as follows:

a) Mud preparation: to 400 ml of drinkwater, 8 g of sodium bentonite is added with stirring, by using a Hamilton Beach apparatus at 9,000 rpm. The suspension is kept stirred for 20 minutes. Then 3.2 g of CMC/LV and 1.6 g of CMC/HV are added. The mixture is kept stirred for a further 5 minutes; 0.2 g of KOH is added. The mixture is then kept stirred for a further 20 minutes. The mud is then charged to steel cells, and is aged for 16 hours at 66°C, with said cells being kept on rotary cylinders.

b) Preparation of the clay debris: the clay sample to be investigates is crushed and sieved; the fraction between 10 and 20 mesh ASTM is recovered. The clay is conditioned under atmospheric air overnight.

c) Inhibition test: 350 ml of aged mud according to (a) above and 20 g of clay prepared according to (b) above, are charged to a steel cell. Said cell is kept 3 hours at 104°C on rotary cylinders. After the cooling of the cell, its contents is poured over a 177 m$\mu$ (80 mesh ASTM) sieve. The residue is washed with isopropanol and is then conditioned in an oven at 70°C for 3 hours. The so obtained debris is sieved once again on the 177 m$\mu$ (80 mesh ASTM) sieve and is conditioned at room temperature overnight. The amount of recovered clay (a) is weighed and finally the recovery percentage relatively to the initial amount (b) is computed.

Recovery % = 100.a/b

By operating as above disclosed, two muds were compared, which respectively contained potassium and sodium CMC (LV + HV). The used clay was of quartzillitic nature, with minor amounts of kaolinite and montmorillonite.

The recovery on the 177 m$\mu$ (80 mesh ASTM) sieve was of 70% in case of potassium salt, vs. 10% of sodium salt case.

Example 7 (COMPARATIVE)

By operating as disclosed in Example 6, two muds were compared, which respectively contained K-CMC (LV + HV) and Na-CMC (LV + HV), with variable amounts of KCl (2.0; 2.5; 3.0 g/400 ml) being added to this latter. By so doing, it is possible to infer, by interpolation, the behaviour at a concentration of KCl equivalent to that of all of K ion contained in K-CMC mud (2.3 g/400 ml).

The used clay (A type) resulted constituted, at the X-ray diffractometric analysis, by quartz and kaolinite, with minor amounts of illite, chlorite, calcite.

The results obtained are:

|  | % Recovery |
|---|---|
| K-CMC Mud | 90.0 (average of three values) |
| Na-CMC + KCl mud | 85.7 |

The above demonstrates, besides the advantage of using one additive only for controlling the rheological properties of the mud and for the control of the clays, also the surprising fact that the system results to be more active in inhibiting the clays when the potassium ion is used as a CMC salt, than when it is used as KCl, as it commonly occurs.

Example 8 (COMPARATIVE)

This test was run by operating as in Example 6, using a clay (B type) constituted by illite and quartz, with minor amounts of kaolinite and montmorillonite. The only variant was that the ageing of the mind containing the clay was carried out at 66°C instead of 104°C.

The results, which are a further confirmation of the conclusion of Example 7, are:

|  | % Recovery |
|---|---|
| K-CMC Mud | 76.7 |
| Na-CMC + KCl mud | 70.0 |

Example 9 (COMPARATIVE)

This test was carried out as in Example 6, using a clay (D type) based on montmorillonite.

The results are the following:

|  | % Recovery |
|---|---|
| K-CMC | 90.0 |
| Na-CMC + KCl | 83.0 |

The results evidence again the unexpected fact that the same amount of potassium ions in similar muds shows a different behaviour according to whether the potassium ion is supplied by a CMC potassium salt, or by potassium chloride, with a clear advantage in favour of the first case.

Example 10 (COMPARATIVE)

This test was carried out as in Example 6, using a clay (C type) constituted by montmorillonite, quartz, kaolinite and illite, with prevailing montmorillonitic character.

The results are the following:

|  | % Recovery |
|---|---|
| K-CMC | 60.0 |
| Na-CMC + KCl | 58.0 |

Example 11 (COMPARATIVE)

1.4 g of K-CMC/HV, purified to a titer of 98.0%, referred to the dry matter, is dissolved in 400 ml of deionized water, by stirring with a Hamilton Beach apparatus for 20 minutes. The Fann apparent viscosity at 25°C is of 28 cP. In parallel, three solution are prepared of 1.24 g of high-viscosity Na-CMC, purified to titer of 98.2%, in 400 ml of deionized water. To the three Na-CMC solutions, 0; 0.3; and 0.4 g are added of KCl/400 ml.

The Fann apparent viscosities at 25°C are respectively: 29.5 cP, 20.0 cP, 19.0 cP. By operating according to (b) and (c) points of above Example 6, but replacing the mud of Example 6 with the so-prepared solutions, the tests of clay inhibition are carried out. A D-type clay, based on montmorillonite, was used.

The results are as follows:

|  | % Recovery |
|---|---|
| Purified K-CMC/HV | 79.0 |
| Purified Na-CMC/HV | 3.0 |
| Purified Na-CMC/HV + 0.3 g of KCl/400 ml | 7.5 |
| Purified Na-CMC/HV + 0.4 g of KCl/400 ml | 11.0 |

Inasmuch as the total potassium contained in the solution of K-CMC/HV corresponds to 0.35 KCl/400 ml, the advantage results evident which derives from the use of the potassium salt of cellulose carboxymethyl ether.

Example 12 (COMPARATIVE)

A drilling mud constituted by water, bentonite (3% by weight), K-CMC/LV (1% by weight), K-CMC/HV (0.5% by weight), KOH (0.2% by weight), was used for drilling a well situated in the province of Foggia (Italy), locality Candela, to the maximum depth of 1,672 m.

At a depth of from 214 m to 940 m, the well was drilled through a layer of light-gray clay, with the presence of up to a maximum of 20% of sand.

From 940 to 1485 m, the bore was drilled through gray siltic clays with intercalation of sand and sandstone.

From 1485 to 1672 m, the bore was drilled through marl-siltic clais, with traces of sand.

The volume of the 21,33 cm (8.5-inch) well resulted only 4.11% different from the theoretical volume.

In a reference well, drilled in the same area, with a driling mud containing bentonite (3% by weight),

EP 0 248 495 B1

low-viscosity Na-CMC (1% by weight), high-viscosity Na-CMC (0.5% by weight), NaOH (0.2% by weight) and lingnosulphonates (1% by weight), to a bottom depth of 1,615 m, the volume of the bore of 21,33 cm (8.5-inches) of diameter resulted 46.64% greater than the theoretical value.

Having regard to the data of Examples 1 to 12, the excellent properties of the potassium salts of polyanionic cellulose (K-PAC) according to the invention are demonstrated.

**Claims**
**Claims for the following Contracting States : FR, GB, IT, NL**

1. A clay-hydration-reducing drilling mud facultatively including a potassium salt of carboxymethylcellulose (K-CMC) having a minimum degree of carboxymethyl substitution of 0,8, characterized in that it comprises, in an aqueous medium:
   (a) from 0,1% to 5% by weight, relative to the overall weight of the drilling mud, of a potassium salt of a polyanionic cellulose (K-PAC), having a resistance to electrolytes, expressed as the ratio of the apparent viscosity of a 0,6% solution of the pure polyanionic cellulose potassium salt (K-PAC) in a 4,0% aqueous solution of NaCl to the apparent viscosity of said 0,6% solution of the pure polyanionic cellulose potassium salt (K-PAC) in distilled water, greater than nine tenths, and still possessing filtrate reduction power up to 150°C;
   (b) from 2% to 8% by weight of clay;
   (c) from 0,05% to 2% by weight of a fluidizer selected from tannins, alkali-metal polyphosphates, treated lignins, and lignosulphonates;
   (d) from 5% to 30% by weight of a plugging agent selected from cellophane, mica, vermiculite, limestone, gilsonite, almond shell, asbestos, straw and vegetable fibres;
   and optionally
   (e) weight-increasing materials, lubricants and from 0.5% to to 2.0% by weight of a surfactant.

2. A drilling mud according to Claim 1, wherein additional potassium salts other than the potassium salts of polyanionic cellulose (K-PAC) are contained.

3. A drilling mud according to Claim 2, wherein said additional potassium salts are selected from potassium chloride and potassium glycolate.

4. A drilling mud according to Claim 3, wherein said potassium chloride and potassium glycolate are contained in the unpurified potassium salt of a polyanionic cellulose (K-PAC).

5. A drilling mud according to Claim 1, wherein said facultatively included potassium salt of carboxymethylcellulose (K-CMC) has a resistance to electrolytes, expressed as the ratio of the apparent viscosity of a 0,6% solution of the pure carboxymethylcellulose potassium salt (K-CMC) in a 4,0% aqueous solution of NaCl to the apparent viscosity of said 0,6% solution of the pure carboxymethylcellulose potassium salt (K-CMC) in distilled water, smaller than nine tenths.

6. A process for drilling through clay strata, comprising the step of inhibiting the hydration of the clays which surround a drilling bore by using a clay-hydration-reducing drilling mud as defined in Claim 1.

7. Process according to Claim 6, wherein additional potassium salts other than the potassium salts of polyanionic cellulose (K-PAC) are contained in the drilling mud.

8. Process according to Claim 7, wherein said additional potassium salts are selected from potassium chloride and potassium glycolate.

9. Process according to Claim 8, wherein said potassium chloride and potassium glycolate are contained in the unpurified potassium salt of a polyanionic cellulose (K-PAC).

10. Process according to Claim 6, wherein said facultatively included potassium salt of carboxymethylcellulose (K-CMC) has a resistance to electrolytes, expressed as the ratio of the apparent viscosity of a 0,6% solution of the pure carboxymethylcellulose potassium salt (K-CMC) in a 4,0% aqueous solution of NaCl to the apparent viscosity of said 0,6% solution of the pure carboxymethylcellulose potassium salt (K-CMC) in distilled water, smaller than nine tenths.

9

**Claims for the following Contracting State : ES**

1. A process for preparing a clay-hydration-reducing drilling mud facultatively including a potassium salt of carboxymethylcellulose (K-CMC) having a minimum degree of carboxymethyl substitution of 0,8, characterized in that it comprises the step of combining, in an aqueous medium:
   (a) from 0,1% to 5% by weight, relative to the overall weight of the drilling mud, of a potassium salt of a polyanionic cellulose (K-PAC), having a resistance to electrolytes, expressed as the ratio of the apparent viscosity of a 0,6% solution of the pure polyanionic cellulose potassium salt (K-PAC) in a 4,0% aqueous solution of NaCl to the apparent viscosity of said 0,6% solution of the pure polyanionic cellulose potassium salt (K-PAC) in distilled water, greater than nine tenths, and still possessing filtrate reduction power up to 150°C;
   (b) from 2% to 8% by weight of clay;
   (c) from 0,05% to 2% by weight of a fluidizer selected from tannins, alkali-metal polyphosphates, treated lignins, and lignosulphonates;
   (d) from 5% to 30% by weight of a plugging agent selected from cellophane, mica, vermiculite, limestone, gilsonite, almond shell, asbestos, straw and vegetable fibres;
   and optionally
   (e) weight-increasing materials, lubricants and from 0.5% to 2.0% by weight of a surfactant.

2. Process according to Claim 1, wherein additional potassium salts other than the potassium salts of polyanionic cellulose (K-PAC) are contained in the drilling mud.

3. Process according to Claim 2, wherein said additional potassium salts are selected from potassium chloride and potassium glycolate.

4. Process according to Claim 3, wherein said potassium chloride and potassium glycolate are contained in the unpurified potassium salt of a polyanionic cellulose (K-PAC).

5. Process according to Claim 1, wherein said facultatively included potassium salt of carboxymethylcellulose (K-CMC) has a resistance to electrolytes, expressed as the ratio of the apparent viscosity of a 0,6% solution of the pure carboxymethylcellulose potassium salt (K-CMC) in a 4,0% aqueous solution of NaCl to the apparent viscosity of said 0,6% solution of the pure carboxymethylcellulose potassium salt (K-CMC) in distilled water, smaller than nine tenths.

6. A process for drilling through clay strata, comprising the step of inhibiting the hydration of the clays which surround a drilling bore by using a clay-hydration-reducing drilling mud as defined in Claim 1.

7. Process according to Claim 6, wherein additional potassium salts other than the potassium salts of polyanionic cellulose (K-PAC) are contained in the drilling mud.

8. Process according to Claim 7, wherein said additional potassium salts are selected from potassium chloride and potassium glycolate.

9. Process according to Claim 8, wherein said potassium chloride and potassium glycolate are contained in the unpurified potassium salt of a polyanionic cellulose (K-PAC).

10. Process according to Claim 6, wherein said facultatively included potassium salt of carboxymethylcellulose (K-CMC) has a resistance to electrolytes, expressed as the ratio of the apparent viscosity of a 0,6% solution of the pure carboxymethylcellinlose potassium salt (K-CMC) in a 4,0% aqueous solution of NaCl to the apparent viscosity of said 0,6% solution of the pure carboxymethylcellulose potassium salt (K-CMC) in distilled water, smaller than nine tenths.

**Patentansprüche**
**Patentanspüche für folgende Vertragsstaaten : FR, GB, IT, NL**

1. Ein die Tonhydratation reduzierender Bohrschlamm, der gegebenenfalls ein Kaliumsalz von Carboxymethylzellulose (K-CMC) mit eine Mindestgrad an Carboxymethylsubstitution von 0,8 enthält, dadurch gekennzeichnet, daß er in einem wäßrigen Medium:

(a) von 0,1 bis 5 Gew.-%, bezogen auf das Gesamtgewicht des Bohrschlammes, eines Kaliumsalzes einer polyanionischen Zellulose (K-PAC) mit einer Beständigkeit gegenüber Elektrolyten, ausgedrückt als das Verhältnis der scheinbaren Viskosität einer 0,6%igen Lösung des reinen polyanionischen Zellulose-Kaliumsalzes (K-PAC) in einer 4,0%igen wäßrigen NaCl-Lösung zur scheinbaren Viskosität dieser 0,6%igen Lösung des reinen polyanionischen Zellulose-Kaliumsalzes (K-PAC) in destilliertem Wasser, von größer als neun Zehntel und noch stets mit einem Filtratreduktionsvermögen bis zu 150°C;

(b) von 2 bis 8 Gew.-% Ton;

(c) von 0,05 bis 2 Gew.-% eines Fluidifizierungsmittels, ausgewählt unter Tanninen, Alkalimetallpolyphosphaten, behandelten Ligninen und Lignosulfonaten;

(d) von 5 bis 30 Gew.-% eines Verstopfungsmittels, ausgewählt unter Zellophan, Glimmer, Vermiculit, Kalkstein, Gilsonit, Mandelschale, Asbest, Stroh und Pflanzenfasern; und gegebenenfalls

(e) gewichtssteigernde Materialien, Schmiermittel und von 0,5 bis 2,0 Gew.-% eines grenzflächenaktiven Mittels

umfaßt.

2. Bohrschlamm nach Anspruch 1, worin zusätzliche, von den Kaliumsalzen polyanionischer Zellulose (K-PAC) verschiedene Kaliumsalze enthalten sind.

3. Bohrschlamm nach Anspruch 2, worin die zusätzlichen Kaliumsalze unter Kaliumchlorid und Kaliumglycolat ausgewählt sind.

4. Bohrschlamm nach Anspruch 3, worin das Kaliumchlorid und Kaliumglycolat in ungereinigtem Kaliumsalz einer polyanionischen Zellulose (K-PAC) enthalten sind.

5. Bohrschlamm nach Anspruch 1, worin das fakultativ eingeschlossene Kaliumsalz von Carboxymethylzellulose (K-CMC) eine Beständigkeit gegenüber Elektrolyten, ausgedrückt als das Verhältnis der scheinbaren Viskosität einer 0,6%igen Lösung des reinen Carboxymethylcellulose-Kaliumsalzes (K-CMC) in einer 4,0%igen wäßrigen NaCl-Lösung zur scheinbaren Viskosität der 0,6%igen Lösung des reinen Cärboxymethylzellulose-Kaliumsalzes (K-CMC) in destilliertem Wasser, von kleiner als neun Zehntel aufweist.

6. Verfahren zum Bohren durch Tonschichten, umfassend die Stufe des Inhibierens der Hydratstation der ein Bohrloch umgebenden Tone durch Anwendung eines die Tonhydratation vermindernden Bohrschlammes nach Anspruch 1.

7. Verfahren nach Anspruch 6, worin im Bohrschlamm zusätzliche, von den Kaliumsalzen von polyanionischer Zellulose (K-PAC) verschiedene Kaliumsalze enthalten sind.

8. Verfahren nach Anspruch 7, worin die zusätzlichen Kaliumsalze unter Kaliumchlorid und Kaliumglycolat ausgewählt sind.

9. Verfahren nach Anspruch 8, worin das Kaliumchlorid und Kaliumglycolat in dem ungereinigten Kaliumsalz einer polyanionischen Zellulose (K-PAC) enthalten sind.

10. Verfahren nach Anspruch 6, worin das fakultativ enthaltene Kaliumsalz von Carboxymethylszellulose (K-CMC) eine Beständigkeit gegenüber Elektrolyten, ausgedrückt als das Verhältnis der scheinbaren Viskosität einer 0,6%igen Lösung des reinen Carboxymethylzellulose-Kaliumsalzes (K-CMC) in einer 4,0%igen wäßrigen NaCl-Lösung zur scheinbaren Viskosität der 0,6%igen Lösung des reinen Carboxymethylzellulose-Kaliumsalzes (K-CMC) in destilliertem Wasser, von kleiner als neun Zehntel aufweist.

**Patentansprüche für folgenden Vertragsstaat : ES**

1. Verfahren zur Herstellung eines die Tonhydratation vermindernden Bohrschlammes, der gegebenenfalls ein Kaliumsalz von Carboxymethylzellulose (K-CMC) mit einem Mindestgrad an Carboxymethylsubstitution von 0,8 enthält, dadurch gekennzeichnet, daß es die Stufe des Vereinigens:

(a) von 0,1 bis 5 Gew.-%, bezogen auf das Gesamtgewicht des Bohrschlammes, eines Kaliumsalzes einer polyanionischen Zellulose (K-PAC) mit einer Beständigkeit gegenüber Elektrolyten, ausgedrückt als das Verhältnis der scheinbaren Viskosität einer 0,6%igen Lösung des reinen polyanionischen Zellulose-Kaliumsalzes (K-PAC) in einer 4,0%igen wäßrigen NaCl-Lösung zur scheinbaren Viskosität dieser 0,6%igen Lösung des reinen polyanionischen Zellulose-Kaliumsalzes (K-PAC) in destilliertem Wasser, von größer als neun Zehntel und noch stets mit einem Filtratreduktionsvermögen bis zu 150°C;

(b) von 2 bis 8 Gew.-% Ton;

(c) von 0,05 bis 2 Gew.-% eines Fluidifizierungsmittels, ausgewählt unter Tanninen, Alkalimetallpolyphosphaten, behandelten Ligninen, und Lignosulfonaten;

(d) von 5 bis 30 Gew.-% eines Verstopfungsmittels, ausgewählt unter Zellophan, Glimmer, Vermiculit, Kalkstein, Gilsonit, Mandelschale, Asbest, Stroh und Pflanzenfasern; und gegebenenfalls

(e) gewichtssteigernden Materialien, Schmiermittel und von 0,5 bis 2,0 Gew.-% eines grenzflächenaktiven Mittels

in einem wäßrigen Medium umfaßt.

2. Verfahren nach Anspruch 1, worin zusätzliche, von den Kaliumsalzen polyanionischer Zellulose (K-PAC) verschiedene Kaliumsalze enthalten sind.

3. Verfahren nach Anspruch 2, worin die zusätzlichen Kaliumsalze unter Kaliumchlorid und Kaliumglycolat ausgewählt sind.

4. Verfahren nach Anspruch 3, worin das Kaliumchlorid und Kaliumglycolat in ungereinigtem Kaliumsalz einer polyanionischen Zellulose (K-PAC) enthalten sind.

5. Verfahren nach Anspruch 1, worin das fakultativ eingeschlossene Kaliumsalz von Carboxymethylzellulose (K-CMC) eine Beständigkeit gegenüber Elektrolyten, ausgedrückt als das Verhältnis der scheinbaren Viskosität einer 0,6%igen Lösung des reinen Carboxymethylcellulose-Kaliumsalzes (K-CMC) in einer 4,0%igen wäßrigen NaCl-Lösung zur scheinbaren Viskosität der 0,6%igen Lösung des reinen Carboxymethylzellulose-Kaliumsalzes (K-CMC) in destilliertem Wasser, von kleiner als neun Zehntel aufweist.

6. Verfahren zum Bohren durch Tonschichten, umfassend die Stufe des Inhibierens der Hydratation der ein Bohrloch umgebenden Tone durch Anwendung eines die Tonhydratation vermindernden Bohrschlammes nach Anspruch 1.

7. Verfahren nach Anspruch 6, worin im Bohrschlamm zusätzliche, von den Kaliumsalzen von polyanionischer Zellulose (K-PAC) verschiedene Kaliumsalze enthalten sind.

8. Verfahren nach Anspruch 7, worin die zusätzlichen Kaliumsalze unter Kaliumchlorid und Kaliumglycolat ausgewählt sind.

9. Verfahren nach Anspruch 8, worin das Kaliumchlorid und Kaliumglycolat in dem ungereinigten Kaliumsalz einer polyanionischen Zellulose (K-PAC) enthalten sind.

10. Verfahren nach Anspruch 6, worin das fakultativ enthaltene Kaliumsalz von Carboxymethylszellulose (K-CMC) eine Beständigkeit gegenüber Elektrolyten, ausgedrückt als das Verhältnis der scheinbaren Viskosität einer 0,6%igen Lösung des reinen Carboxymethylzellulose-Kaliumsalzes (K-CMC) in einer 4,0%igen wäßrigen NaCl-Lösung zur scheinbaren Viskosität der 0,6%igen Lösung des reinen Carboxymethylzellulose-Kaliumsalzes (K-CMC) in destilliertem Wasser, von kleiner als neun Zehntel aufweist.

**Revendications**

**Revendications pour les Etats contractants suivants : FR, GB, IT, NL**

1. Boue de forage réduisant le taux d'hydratation des argiles, contenant facultativement un sel de potassium de carboxyméthylcellulose (K-CMC) présentant un degré minimal de substitution carboxyméthylique de 0,8, caractérisée en ce qu'elle comprend, dans un milieu aqueux :

(a) de 0,1 % à 5 % en poids, par rapport au poids total de la boue de forage, d'un sel de potassium d'une cellulose polyanionique (K-PAC), présentant une résistance aux électrolytes, exprimée comme le rapport de la viscosité apparente d'une solution à 0,6 % du sel pur de potassium de cellulose polyanionique (K-PAC) dans une solution aqueuse à 4,0 % de NaCl à la viscosité apparente d'une solution à 0,6 % du sel pur de potassium de cellulose polyanionique (K-PAC) dans de l'eau distillée, supérieure à neuf dixièmes, et possédant encore un pouvoir de réduction du filtrat jusqu'à 150°C ;

(b) de 2 % à 8 % en poids d'argile ;

(c) de 0,05 % à 2 % en poids d'un agent fluidifiant, choisi parmi les tanins, les polyphosphates de métal alcalin, les lignines traitées et les lignolsulfonates ;

(d) de 5 % à 30 % en poids d'un produit colmatant choisi parmi la cellophane, le mica, la vermiculite, le calcaire, la gilsonite, les coquilles d'amandes, l'amiante, la paille et les fibres végétales ; et éventuellement

(e) des matériaux augmentant le poids, des lubrifiants et de 0,5 % à 2,0 % en poids d'un tensioactif.

**2.** Boue de forage conforme à la revendication 1, qui contient des sels de potassium supplémentaires, autres que les sels de potassium de cellulose polyanionique (K-PAC).

**3.** Boue de forage conforme à la revendication 2, dans laquelle lesdits sels supplémentaires de potassium sont choisis parmi le chlorure de potassium et le glycolate de potassium.

**4.** Boue de forage conforme à la revendication 3, lesdits chlorure de potassium et glycolate de potassium étant contenus dans le sel de potassium non purifié d'une cellulose polyanionique (K-PAC).

**5.** Boue de forage conforme à la revendication 1, dans laquelle ledit sel de potassium de carboxyméthylcellulose (K-CMC) facultativement contenu présente une résistance aux électrolytes, exprimée comme le rapport de la viscosité apparente d'une solution à 0,6 % du sel pur de potassium de carboxyméthylcellulose (K-CMC) dans une solution aqueuse à 4,0 % de NaCl à la viscosité apparente d'une solution à 0,6 % du sel pur de potassium de carboxyméthylcellulose (K-CMC) dans de l'eau distillée, inférieure à neuf dixièmes.

**6.** Procédé de forage à travers des couches d'argiles, comprenant l'étape consistant à empêcher l'hydratation des argiles entourant le puits de forage en utilisant une boue de forage diminuant le taux d'hydratation des argiles, telle que définie dans la revendication 1.

**7.** Procédé conforme à la revendication 6, dans lequel la boue de forage contient des sels supplémentaires de potassium autres que les sels de potassium de cellulose polyanionique (K-PAC).

**8.** Procédé conforme à la revendication 7, dans lequel ledits sels supplémentaires de potassium sont choisis parmi le chlorure de potassium et le glycolate de potassium.

**9.** Procédé conforme à la revendication 8, dans lequel lesdits chlorure de potassium et glycolate de potassium sont contenus dans le sel non purifié de potassium d'une cellulose polyanionique (K-PAC).

**10.** Procédé conforme à la revendication 6, dans lequel ledit sel de potassium de carboxyméthylcellulose (K-CMC) facultativement contenu présente une résistance aux électrolytes, exprimée comme le rapport de la viscosité apparente d'une solution à 0,6 % du sel pur de potassium de carboxyméthylcellulose (K-CMC) dans une solution aqueuse à 4,0 % de NaCl à la viscosité apparente d'une solution à 0,6 % du sel pur de potassium de carboxyméthylcellulose (K-CMC) dans de l'eau distillée, inférieure à neuf dixièmes.

**Revendications pour l'Etat contractant suivant : ES**

**1.** Procédé de préparation d'une boue de forage réduisant le taux d'hydratation des argiles, contenant facultativement un sel de potassium de carboxyméthylcellulose (K-CMC) présentant un degré minimal de substitution carboxyméthylique de 0,8, caractérisé en ce qu'il comporte l'étape consistant à mélanger, dans un milieu aqueux :

(a) de 0,1 % à 5 % en poids, par rapport au poids total de la boue de forage, d'un sel de potassium d'une cellulose polyanionique (K-PAC), présentant une résistance aux électrolytes, exprimée comme le rapport de la viscosité apparente d'une solution à 0,6 % du sel pur de potassium de cellulose polyanionique (K-PAC) dans une solution aqueuse à 4,0 % de NaCl à la viscosité apparente d'une solution à 0,6 % du sel pur de potassium de cellulose polyanionique (K-PAC) dans de l'eau distillée, supérieure à neuf dixièmes, et possédant encore un pouvoir de réduction du filtrat jusqu'à 150°C ;

(b) de 2 % à 8 % en poids d'argile ;

(c) de 0,05 % à 2 % en poids d'un agent fluidifiant, choisi parmi les tanins, les polyphosphates de métal alcalin, les lignines traitées et les lignolsulfonates ;

(d) de 5 % à 30 % en poids d'un produit colmatant choisi parmi la cellophane, le mica, la vermiculite, le calcaire, la gilsonite, les coquilles d'amandes, l'amiante, la paille et les fibres végétales ; et éventuellement

(e) des matériaux augmentant le poids, des lubrifiants et de 0,5 % à 2,0 % en poids d'un tensioactif.

**2.** Procédé conforme à la revendication 1, dans lequel la boue de forage contient des sels supplémentaires de potassium autres que les sels de potassium de cellulose polyanionique (K-PAC).

**3.** Procédé conforme à la revendication 2, dans lequel lesdits sels supplémentaires de potassium sont choisis parmi le chlorure de potassium et le glycolate de potassium.

**4.** Procédé conforme à la revendication 3, lesdits chlorure de potassium et glycolate de potassium étant contenus dans le sel de potassium non purifié d'une cellulose polyanionique (K-PAC).

**5.** Procédé conforme à la revendication 1, dans lequel ledit sel de potassium de carboxyméthylcellulose (K-CMC) facultativement contenu présente une résistance aux électrolytes, exprimée comme le rapport de la viscosité apparente d'une solution à 0,6 % du sel pur de potassium de carboxyméthylcellulose (K-CMC) dans une solution aqueuse à 4,0 % de NaCl à la viscosité apparente d'une solution à 0,6 % du sel pur de potassium de carboxyméthylcellulose (K-CMC) dans de l'eau distillée, inférieure à neuf dixièmes.

**6.** Procédé de forage à travers des couches d'argiles, comprenant l'étape consistant à empêcher l'hydratation des argiles entourant le puits de forage en utilisant une boue de forage diminuant le taux d'hydratation des argiles, telle que définie dans la revendication 1.

**7.** Procédé conforme à la revendication 6, dans lequel la boue de forage contient des sels supplémentaires de potassium autres que les sels de potassium de cellulose polyanionique (K-PAC).

**8.** Procédé conforme à la revendication 7, dans lequel ledits sels supplémentaires de potassium sont choisis parmi le chlorure de potassium et le glycolate de potassium.

**9.** Procédé conforme à la revendication 8, dans lequel lesdits chlorure de potassium et glycolate de potassium sont contenus dans le sel non purifié de potassium d'une cellulose polyanionique (K-PAC).

**10.** Procédé conforme à la revendication 6, dans lequel ledit sel de potassium de carboxyméthylcellulose (K-CMC) facultativement contenu présente une résistance aux électrolytes, exprimée comme le rapport de la viscosité apparente d'une solution à 0,6 % du sel pur de potassium de carboxyméthylcellulose (K-CMC) dans une solution aqueuse à 4,0 % de NaCl à la viscosité apparente d'une solution à 0,6 % du sel pur de potassium de carboxyméthylcellulose (K-CMC) dans de l'eau distillée, inférieure à neuf dixièmes.